# EUROPEAN PATENT SPECIFICATION

(11) **EP 2 480 115 B1**
(45) Date of publication and mention of the grant of the patent: **25.02.2015**
(21) Application number: 10760986.9
(22) Date of filing: 23.09.2010
(51) Int. Cl.: A47J 31/06

(54) **DELIVERY STARTER DEVICE FOR A MACHINE FOR THE PRODUCTION OF AN AROMATIC BEVERAGE**
AUSGABESTARTERVORRICHTUNG FÜR EINE MASCHINE ZUR HERSTELLUNG EINES AROMATISCHEN GETRÄNKS
DISPOSITIF DE DÉMARRAGE DE DISTRIBUTION DESTINÉ À UNE MACHINE DE PRODUCTION D'UNE BOISSON AROMATIQUE

(30) Priority: 24.09.2009 IT MI20091633
(43) Date of publication of application: 01.08.2012
(73) Proprietor: Brasilia S.p.A., 27050 RETORBIDO (PAVIA) (IT)
(72) Inventor: GIAMPIERO, Rossi, I-27055 Rivanazzano (Pavia) (IT); ALESSANDRO, Ostuni, I-50053 Empoli (Firenze) (IT)
(74) Representative: Vittorangeli, Lucia
(86) International application number: PCT/EP2010/064063
(87) International publication number: WO 2011/036215

(56) References cited:
- EP-A1- 1 247 480
- WO-A1-2005/011452

## Description

The present invention relates to a delivery starter device for a machine for the production of an aromatic beverage, for example a coffee maker.

The sector of application concerns delivery preferably by means of machines with a delivery assembly having a chamber for the manual housing of a loose or packaged cartridge of the product with which to make the beverage.

Delivery starter devices for coffer makers that operate only when a certain pressure is reached, have been on the market for some time.

This makes it possible, for example, to carry out pre-infusion of the coffee powder to improve extraction of the aromatic essence. In some known delivery starter devices there are perforating tips that come into contact with the capsule containing the coffee powder when the capsule is deformed and inflated due to the effect of the pressure of the water injected into it. The perforating tips thereby open the bottom of the capsule to enable delivery. The main complaint about these types of delivery starter devices concerns the fact that the delivery pressure is determined by the mechanical characteristics of the bottom of the capsule and by the geometry of the perforating tips. As a result, the delivery pressure varies from capsule to capsule and from machine to machine.

In other known types of devices delivery starter devices, a mushroom valve with spring is used, which blocks a delivery hole. Delivery begins only when the hydraulic pressure inside the infusion chamber generates an opening force on the valve greater than the closing force exercised by the spring.

In these delivery starter devices, there is also the problem that after delivery starts, the mushroom valve causes a drop in pressure in the liquid delivered, which may lead to a deterioration in the organoleptic properties of the beverage. For example, the beverage produced may have a nonuniform surface froth.

Moreover, the infusion chamber remains pressurised even once delivery has been completed, which could pose a danger on opening. Document WO-A-2005/011 452 discloses a device according to the preamble of independent claim 1. The technical task of the present invention, therefore, is to provide a delivery starter device for a machine for the production of an aromatic beverage that eliminates the technical problems associated with the known art. Within the scope of this technical task, an object of the invention is to provide a delivery starter device for a machine for the production of an aromatic beverage capable of starting delivery only at the desired pressure, regardless of the morphological and structural properties of the cartridge and of the machine in which the cartridge is loaded. A further object of the invention is to provide a delivery starter device for a machine for the production of an aromatic beverage that can improve the organoleptic properties of the beverage produced.

Yet another object of the invention is to provide a delivery starter device for a machine for the production of an aromatic beverage in which the delivery pressure can be adjusted as desired.

A further but not final object of the invention is to provide a delivery starter device for a machine for the production of an aromatic beverage that is inherently safe to use.

The technical task, together with these and other objects of the present invention are achieved by providing a delivery starter device for a machine for the production of an aromatic beverage consistent with claim 1.

Advantageously, the delivery starter device object of the present invention does not cause a drop in pressure in the beverage after delivery starts, thereby ensuring that the beverage has the best possible organoleptic properties.

Further features of the present invention are described in the subsequent claims.

Other features and advantages of the invention will become more clear from the following detailed, but not exclusive, description of a preferred embodiment of the delivery starter device for a machine for the production of an aromatic beverage consistent with the invention, which is illustrated by no way of limitation in the accompanying drawings, in which:
figure 1 shows a cross-section view of a delivery starter device according to a first embodiment, before the start of delivery;
figure 2 shows a cross-section view of the delivery starter device illustrated in figure 1 after the start of delivery;
figure 3 shows a cross-section view of a delivery starter device according to a second embodiment, before the start of delivery;
figure 4 shows a cross-section view of the delivery starter device illustrated in figure 3, after the start of delivery;
figure 5 shows a cross-section view of a delivery starter device consistent with the invention, before the start of delivery;
figure 6 shows a cross-section view of the delivery starter device illustrated in figure 5, after the start of delivery.

Equivalent parts in the description are indicated using the same numerical reference.

With reference to the figures mentioned, a delivery starter device for a machine for the production of an aromatic beverage is shown, indicated in its entirety by the reference number 1.

The delivery starter device 1 comprises a delivery element 2 with a delivery duct 3 connected to a chamber 4 for housing a cartridge 5 of a substance for the production of the beverage.

The delivery element 2 is associable with a piston 6 for closing the chamber 4 having a duct 7 for supplying water to the chamber 4.

The device 1 comprises an elastic element 8 positioned so as to close a secondary water duct 9 subject to a hydraulic pressure correlated with the supply pressure to the chamber 4.

The elastic element 8 is deformable by said hydraulic pressure so as to reversibly displace a cursor 10 in a position allowing delivery to start. Advantageously, means are also provided for regulating the value of said hydraulic pressure that corresponds to said elastic element 8 being deformed to allow delivery to start.

The elastically yielding element 8 is preferably a heat-resistant rubber membrane.

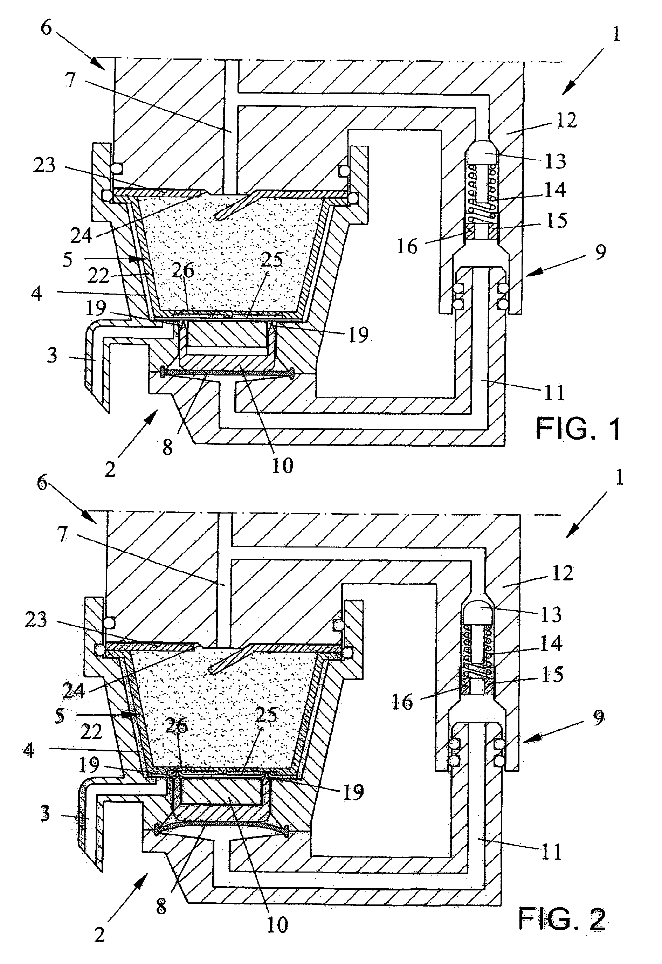

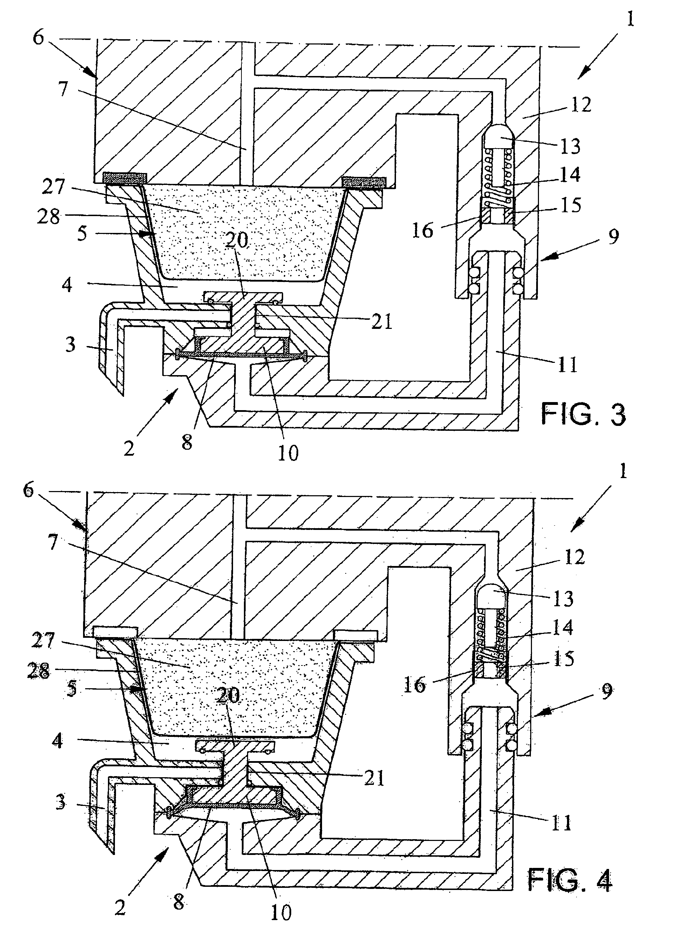

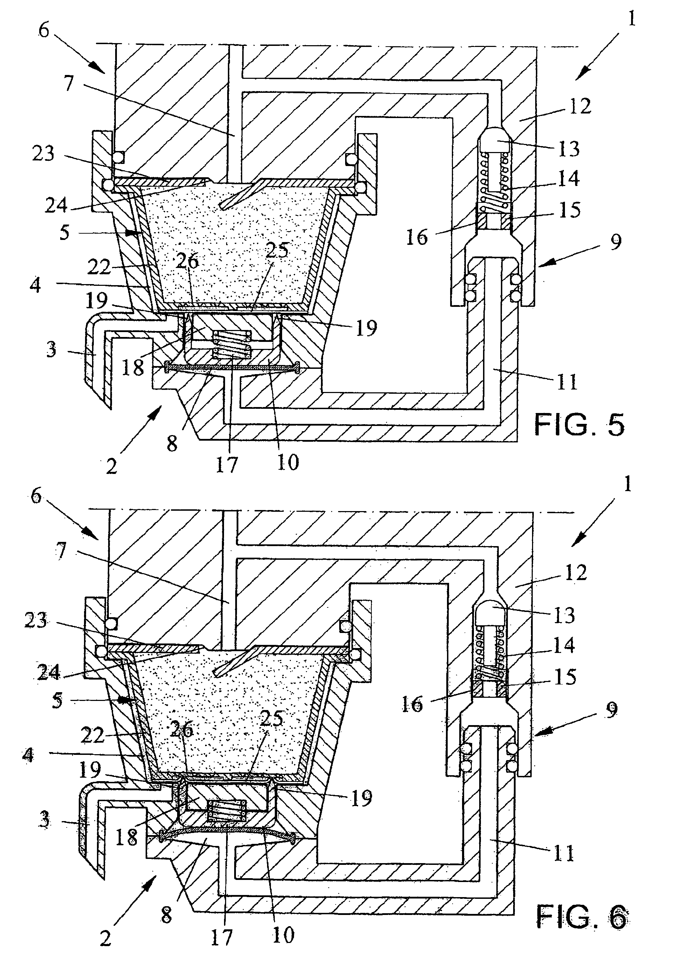

The cursor 10 may rest against (figures 1 and 5) or be attached to the elastically yielding element 8 (figure 3).

The cursor 10 is preferably installed beneath the base of the chamber 4.

At least in the case where it simply rests on the elastically yielding element 8, the cursor 10 is movable along a fixed translation guide 18 provided in the delivery element 2. The secondary duct 9 is preferably a branch of the supply duct 7.

In this case the secondary duct 9 has a first portion 11 that extends from the delivery element 2 and can be connected by means of a watertight coupling to a second portion 12 that extends from the closing piston 6.

A preferred embodiment is such that the first portion 11 and the second portion 12 of the secondary duct 9 engage when the chamber 4 closes, due to the effect of the relative movement between the delivery element 2 and the closing piston 6, and disengage when the chamber 4 opens, again due to the effect of the relative movement between the delivery element 2 and the closing piston 6.

In a non-illustrated variant of the present invention, the secondary duct 9 is independent from the supply duct 7 and may even be constructed in a single piece.

In the solutions shown, it is evident that the water supplying the secondary duct 9 is at the same pressure as the water supplying the chamber 4, but in other non-illustrated embodiments of the invention, the water supplying the secondary duct 9 can be taken from any point on the hydraulic circuit of the machine, having a known pressure correlated with the supply pressure to the chamber 4. In general, the supply pressure to the secondary duct 9 may be between the delivery pressure of the pump on the hydraulic circuit of the machine and the supply pressure of the water in the chamber 4.

With reference to the embodiments illustrated in figures 1 to 4, the regulating means comprise an on-off valve 13 located inside the secondary duct 9 and movable in contrast to, and by the effect of, a spring 14.

Preferably, the spring 14 is associated with means for adjusting its form, for example a threaded ferrule 15 engaging in an internal thread 16 in said secondary duct 9.

What differentiates the first preferred embodiment (figures 1 and 2) from the second preferred embodiment (figures 3 and 4) of the present invention is that in the first case the cursor 10 has one or more pointed tips 19 for perforating the cartridge 5, while in the second case the cursor 10 has a shutter valve 20 on a passage 21 between the chamber 4 and the delivery duct 3.

With reference to the embodiment illustrated in figures 5 and 6, the means of adjustment comprise a spring 17 interposed between the cursor 10 and its fixed translation guide 18 on the delivery element 2.

The spring 17 is designed to contrast the deformation of the elastically yielding element 8. Also in this case, the cursor 10 has one or more pointed tips 19 for perforating the cartridge 5. Operation of the delivery starter device 1 according to the invention is apparent from the descriptions and illustrations provided, and, in detail, is substantially as follows.

With reference to the first case illustrated in figures 1 and 2, the cartridge 5 comprises a sealed capsule 22 with a cover 23 subject to breakage by the raised end 24 of the closing piston 6, with a foil 25 welded perimetrically to the outside of the perforated bottom 26 of the capsule 22. When the chamber 5 closes, part of the pressurised water sent from the hydraulic circuit of the machine towards the chamber 4 by means of the supply duct 1 is diverted into the secondary duct 9 until it arrives at the valve 13, which is initially closed. When the pressure in the secondary duct 9 upstream of the valve 13 reaches the value required to open the valve 9, the hydraulic pressure is transmitted to the elastically yielding element 8, which as it deforms moves the cursor 10 along the fixed translation guide 18. The tips 19 carried by the cursor 10 move from a retracted position in the base of the chamber 4 to a forward position in which the tips perforate the foil 25 of the capsule 22 thereby starting delivery. The beverage is free to exit the delivery duct 3 without any drop in pressure. The opening pressure for the valve 13, and therefore the delivery starting pressure, can be regulated by means of the ferrule 15. In detail, the ferrule 15 can be screwed towards the valve 13 to compress the spring 14 interposed between the ferrule 15 and the valve 13 thereby increasing the delivery starting pressure. Turning the ferrule 15 in the opposite direction reduces the delivery starting pressure. With reference to the second case illustrated in figures 3 and 4, the cartridge 5 comprises loose powder 27 inserted into a filter-holder 28. Unlike the previous case, when the hydraulic pressure is transmitted to the elastically yielding element 8, the deformation thereof causes the movement of the cursor 10 which carries the shutter valve 20 to a position removed from the sealing surface constituted by the base of the chamber 4. The passage 21 therefore opens and the beverage is free to exit the delivery duct 3 without any drop in pressure.

With reference to the third case illustrated in figures 5 and 6, as in the first case illustrated in figures 1 and 2, the cartridge 5 comprises a sealed capsule 22 with a cover 23 subject to breakage by the raised end 24 of the closing piston 6, with a foil 25 welded perimetrically to the outside of the perforated bottom 26 of the capsule 22. When the chamber 5 closes, part of the pressurised water from the supply duct 1 passes into the secondary duct 9 arriving directly at the elastically yielding element 8, which deforms, thereby starting delivery, only when the force due to the hydraulic pressure exerted on the rear of the elastically yielding element 8 exceeds the force exerted by the cursor 10 on the front of the elastically yielding element 8 by the effect of the spring 17. In this case, the delivery pressure can be regulated by suitably designing the mechanical and configurational properties of the elastically yielding element 8 and of the spring 17. Also in this case, the beverage is free to exit the delivery duct 3 without any drop in pressure.

The delivery starter device for a machine for the production of an aromatic beverage thus conceived is subject to numerous modifications and variants, all of which are covered by the scope of the invention; in addition, all the components can be replaced by technically equivalent elements.

In practice, the materials used, and the dimensions can be adapted to requirements and to the state of the art.

## Claims

1. A delivery starter device (1) for a machine for the production of an aromatic beverage comprising a delivery element (2) with a delivery duct (3) connected to a chamber (4) for housing a cartridge (5) of a substance for the production of said beverage, said delivery element (2) being associable with a piston (6) for closing said chamber (4) having a duct (7) for supplying water to said chamber (4), wherein it comprises an elastic element (8) positioned so as to close a secondary water duct (9) subject to a hydraulic pressure correlated with the supply pressure to said chamber (4), said elastic element (8) being deformable by said hydraulic pressure so as to reversibly displace a cursor (10) in a position of allowing the delivery to start, means also being provided for regulating the value of said hydraulic pressure that corresponds to said elastic element (8) being deformed for allowing the delivery to start, **characterised in that** said cursor (10) is movable along a fixed translation guide (18) provided in said delivery element (2) said adjustment means comprising a spring (17) interposed between said cursor (10) and said fixed guide (18), said spring (17) being designed to contrast the deformation of said elastically yielding element (8).

2. A delivery starter device (1) for a machine for the production of an aromatic beverage according to claim 1, **characterised in that** said elastically yielding element (8) is a rubber membrane.

3. A delivery starter device (1) for a machine for the production of an aromatic beverage according to one or more of the previous claims, **characterised in that** said secondary duct (9) is a branch of said supply duct (7).

4. A delivery starter device (1) for a machine for the production of an aromatic beverage according to one or more of the previous claims, **characterised in that** said cursor (10) rests against said elastically yielding element (8).

5. A delivery starter device (1) for a machine for the production of an aromatic beverage according to one or more of the previous claims, **characterised in that** said cursor (10) is attached to said elastically yielding element (8).

6. A delivery starter device (1) for a machine for the production of an aromatic beverage according to one or more of the previous claims, **characterised in that** said cursor (10) is installed beneath the base of said chamber (4).

7. A delivery starter device (1) for a machine for the production of an aromatic beverage according to one or more of the previous claims, **characterised in that** said second duct (9) has a first portion (11) that extends from said delivery element (2) and that can be connected by means of a watertight coupling to a second portion (12) that extends from said closing piston (6).

8. A delivery starter device (1) for a machine for the production of an aromatic beverage according to one or more of the previous claim, **characterised in that** said cursor (10) includes one or more pointed tips (19) for perforating said cartridge (5).

9. A delivery starter device (1) for a machine for the production of an aromatic beverage according to one or more of the previous claims 1-7, **characterised in that** said cursor (10) includes a shutter valve (20) on a passage (21) between said chamber (4) and said delivery duct (3).

10. A machine for the production of an aromatic beverage **characterised in that** it includes a delivery starter device (1) according to one or more of the previous claims.

## Patentansprüche

1. Ausgabestartervorrichtung (1) für eine Maschine zur Herstellung eines aromatischen Getränks, umfassend ein Ausgabeelement (2) mit einer Ausgabeleitung (3), verbunden mit einer Kammer (4) zur Unterbringung einer Kartusche (5) einer Substanz zur Herstellung des Getränks, wobei das Ausgabeelement (2) mit einem Kolben (6) zum Verschließen der Kammer (4) angeschlossen werden kann, aufweisend eine Leitung (7) zur Versorgung der Kammer (4) mit Wasser, wobei sie ein elastisches Element (8) umfasst, das positioniert ist, um eine Hilfswasserleitung (9) zu verschließen, ausgesetzt einem hydraulischen Druck, korreliert mit dem Versorgungsdruck zur Kammer (4), wobei das elastische Element (8) durch den hydraulischen Druck verformbar ist, sodass ein Schieber (10) umkehrbar in eine Position verschoben wird, um den Start der Ausgabe zu erlauben, wobei ebenfalls Mittel bereitgestellt werden, um den Wert des hydraulischen Drucks zu regeln, der dem elastischen Element (8) entspricht, das verformt wird, um den Start der Ausgabe zu erlauben, **dadurch gekennzeichnet, dass** der Schieber (10) entlang einer fixierten Verfahrführung (18) bewegbar ist, bereitgestellt im Ausgabeelement (2), wobei die Verstellmittel eine Feder (17) umfassen, die zwischen dem Schieber (10) und der fixierten Führung (18) angeordnet ist, wobei die Feder (17) ausgestaltet ist, um der Verformung des elastisch nachgebenden Elements (8) entgegenzuwirken.

2. Ausgabestartervorrichtung (1) für eine Maschine zur Herstellung eines aromatischen Getränks nach Anspruch 1, **dadurch gekennzeichnet, dass** es sich beim elastisch nachgebenden Element (8) um eine Kautschukmembran handelt.

3. Ausgabestartervorrichtung (1) für eine Maschine zur Herstellung eines aromatischen Getränks nach einem oder mehreren der vorhergehenden Ansprüche, **dadurch gekennzeichnet, dass** es sich bei der Hilfsleitung (9) um einen Abzweig der Versorgungsleitung (7) handelt.

4. Ausgabestartervorrichtung (1) für eine Maschine zur Herstellung eines aromatischen Getränks nach einem oder mehreren der vorhergehenden Ansprüche, **dadurch gekennzeichnet, dass** der Schieber (10) am elastisch nachgebenden Element (8) anliegt.

5. Ausgabestartervorrichtung (1) für eine Maschine zur Herstellung eines aromatischen Getränks nach einem oder mehreren der vorhergehenden Ansprüche, **dadurch gekennzeichnet, dass** der Schieber (10) am elastisch nachgebenden Element (8) angebracht ist.

6. Ausgabestartervorrichtung (1) für eine Maschine zur Herstellung eines aromatischen Getränks nach einem oder mehreren der vorhergehenden Ansprüche, **dadurch gekennzeichnet, dass** der Schieber (10) unterhalb der Basis der Kammer (4) montiert ist.

7. Ausgabestartervorrichtung (1) für eine Maschine zur Herstellung eines aromatischen Getränks nach einem oder mehreren der vorhergehenden Ansprüche, **dadurch gekennzeichnet, dass** die zweite Leitung (9) einen ersten Abschnitt (11) aufweist, der sich vom Ausgabeelement (2) erstreckt und mittels einer wasserdichten Kupplung an einen zweiten Abschnitt (12) angeschlossen werden kann, der sich vom Verschließkolben (6) erstreckt.

8. Ausgabestartervorrichtung (1) für eine Maschine zur Herstellung eines aromatischen Getränks nach einem oder mehreren der vorhergehenden Ansprüche, **dadurch gekennzeichnet, dass** der Schieber (10) eine oder mehrere spitz zulaufende Spitzen (19) einschließt, um die Kartusche (5) zu perforieren.

9. Ausgabestartervorrichtung (1) für eine Maschine zur Herstellung eines aromatischen Getränks nach einem oder mehreren der Ansprüche 1 bis 7, **dadurch gekennzeichnet, dass** der Schieber (10) ein Absperrventil (20) an einem Durchgang (21) zwischen der Kammer (4) und der Ausgabeleitung (3) einschließt.

10. Maschine zur Herstellung eines aromatischen Getränks, **dadurch gekennzeichnet, dass** sie eine Ausgabestartervorrichtung (1) nach einem oder mehreren der vorhergehenden Ansprüche einschließt.

## Revendications

1. Dispositif de démarrage de distribution (1) destiné à une machine de production d'une boisson aromatique comprenant un élément de distribution (2) avec un conduit de distribution (3) relié à une chambre (4) destinée à loger une cartouche (5) d'une substance pour la production de ladite boisson, ledit élément de distribution (2) pouvant être associé à un piston (6), pour fermer ladite chambre (4), ayant un conduit (7) pour alimenter en eau ladite chambre (4), dans lequel il comprend un élément élastique (8) positionné de manière à fermer un conduit d'eau secondaire (9) soumis à une pression hydraulique corrélée à la pression d'alimentation de ladite chambre (4), ledit élément élastique (8) étant déformable par ladite pression hydraulique de manière à déplacer de façon réversible un coulisseau (10) dans une position permettant à la distribution de commencer, des moyens étant aussi prévus pour régler la valeur de ladite pression hydraulique qui correspond au dit élément élastique (8) étant déformé pour permettre à la distribution de commencer, **caractérisé en ce que** ledit coulisseau (10) est mobile le long d'un guide de translation fixe (18) prévu dans ledit élément de distribution (2), lesdits moyens de réglage comprenant un ressort (17) interposé entre ledit coulisseau (10) et ledit guide fixe (18), ledit ressort (17) étant conçu pour s'opposer à la déformation dudit élément souple flexible élastiquement (8).

2. Dispositif de démarrage de distribution (1) destiné à une machine de production d'une boisson aromatique selon la revendication 1, **caractérisé en ce que** ledit élément souple flexible élastiquement (8) est une membrane en caoutchouc.

3. Dispositif de démarrage de distribution (1) destiné à une machine de production d'une boisson aromatique selon l'une ou plusieurs des revendications précédentes, **caractérisé en ce que** ledit conduit secondaire (9) est un branchement dudit conduit d'alimentation (7).

4. Dispositif de démarrage de distribution (1) destiné à une machine de production d'une boisson aromatique selon l'une ou plusieurs des revendications précédentes, **caractérisé en ce que** ledit coulisseau (10) repose contre ledit élément souple flexible élastiquement (8).

5. Dispositif de démarrage de distribution (1) destiné à une machine de production d'une boisson aromatique selon l'une ou plusieurs des revendications précédentes, **caractérisé en ce que** ledit coulisseau (10) est attaché au dit élément souple flexible élastiquement (8).

6. Dispositif de démarrage de distribution (1) destiné à une machine de production d'une boisson aromatique selon l'une ou plusieurs des revendications précédentes, **caractérisé en ce que** ledit coulisseau (10) est installé sous la base de ladite chambre (4).

7. Dispositif de démarrage de distribution (1) destiné à une machine de production d'une boisson aromatique selon l'une ou plusieurs des revendications précédentes, **caractérisé en ce que** ledit second conduit (9) possède une première partie (11) se développant à partir dudit élément de distribution (2) et pouvant être reliée au moyen d'un raccordement étanche à une seconde partie (12) se développant à partir dudit piston de fermeture (6).

8. Dispositif de démarrage de distribution (1) destiné à une machine de production d'une boisson aromatique selon l'une ou plusieurs des revendications précédentes, **caractérisé en ce que** ledit coulisseau (10) comprend un ou plusieurs bouts pointus (19) pour perforer ladite cartouche (5).

9. Dispositif de démarrage de distribution (1) destiné à une machine de production d'une boisson aromatique selon l'une ou plusieurs des revendications de 1 à 7, **caractérisé en ce que** ledit coulisseau (10) comprend un clapet de non-retour (20) sur un passage (21) entre ladite chambre (4) et ledit conduit de distribution (3).

10. Machine pour la production d'une boisson aromatique, **caractérisée en ce qu'**elle comporte un dispositif de démarrage de distribution (1) selon l'une ou plusieurs des revendications précédentes.
